# EUROPEAN PATENT SPECIFICATION

(11) **EP 3 293 057 B1**
(45) Date of publication and mention of the grant of the patent: **19.06.2019**
(21) Application number: 17189993.3
(22) Date of filing: 07.09.2017
(51) Int. Cl.: B60R 21/205

(54) **AIRBAG MODULE FOR WOOD DASHBOARD SURFACE**
AIRBAGMODUL FÜR HOLZINSTRUMENTENTAFELOBERFLÄCHE
MODULE DE COUSSIN DE SÉCURITÉ POUR SURFACE DE TABLEAU DE BORD EN BOIS

(30) Priority: 07.09.2016 US 201662384298 P; 06.09.2017 US 201715696598
(43) Date of publication of application: 14.03.2018
(73) Proprietor: Thunder Power New Energy Vehicle Development Company Limited, Central, Hong Kong (CN)
(72) Inventor: BRUSCO, Massimiliano, Central Hong Kong (CN)
(74) Representative: Sadler, Peter Frederick

(56) References cited:
- EP-A1- 0 608 303
- US-B1- 7 040 653

## Description

### BACKGROUND OF THE INVENTION

The invention relates to an airbag system which is integrated in an inner trim piece for motor vehicles.

Fitting an airbag module for one or more front passengers in a dashboard of a vehicle is generally known in the art. A flap which can be torn in the event of being triggered is typically provided in the dashboard. The flap typically comprises a support made of plastic, wood fibers or metal, a covering layer or outer skin. It is known to produce dashboards at least partly from laminates or from layers connected to one another by laminating. The airbag module typically comprises an actual airbag and a gas generator. It is regulated that the airbag module must be supported below the support on the cross support of the vehicle. Tear lines are generally formed in the support as sections of weakened material as cuts or incisions and predefine the flap with one or two wings which can be burst open by the airbag when filled by the gas generated by the gas generator. For filling the airbag with gas, a certain buildup of pressure is required so that an explosion-like tearing of the flap can take place.

The generic European patent application EP 0608303 describes a cover for a housing for an air-bag impact protection system for a vehicle. The cover comprises a plate made of a deformable metal or synthetic plastic material. The plate may be decorated directly or by an additional layer such as a veneer, the deformability of which is matched to the basic plate. On operation of the system the inflating air bag pushes the cover upwardly deforming it and a retention bracket. US patent application US 7040653 describes a steering wheel assembly in which a steering wheel is connected to and for rotation with the outer shaft of the steering wheel assembly and an airbag module includes an airbag connected to the inner shaft of the steering wheel assembly. The airbag may be tubular and formed from flat sheets of film or composite material, or by blow molding or a similar process in order to create an airbag substantially larger than current airbags and which may be designed to interact with the occupant regardless of where he/she is positioned. Materials for the airbag can be selected from the class of plastic materials known as thermoplastic elastomers which includes, among others, polyurethane, polyester elastomer and metallocene-catalyzed polyolefin.

### BRIEF SUMMARY OF THE INVENTION

Embodiments can provide a dashboard with a surface made of wood. In particular, embodiments provide a dashboard of a transportation apparatus, the dashboard comprising a wood layer that occupies at least a portion of the dashboard, the dashboard further comprising an airbag module comprising: an airbag made of a film material, wherein the airbag is fitted in an airbag region of the dashboard, wherein the airbag region has a surface entirely made of wood; and a gas generator attached to the airbag for providing gas to fill the airbag. The dashboard comprises a wood layer that makes up a surface of the dashboard, and the airbag region is located within the wood layer. The airbag may optionally be made of thin film. The thin film can be fitted in a layer of the dashboard. Tear lines may optionally be formed around the wood dashboard where the air bag is located. The air bag may burst out of the wood dashboard when filled with gas.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

FIG. 1 generally illustrates an embodiment of a transportation apparatus in accordance with the disclosure.
FIG. 2 shows an example of a dashboard in an explosion view.
FIG. 3 illustrates an example embodiment of an airbag module in accordance with the disclosure.

### DETAILED DESCRIPTION OF THE INVENTION

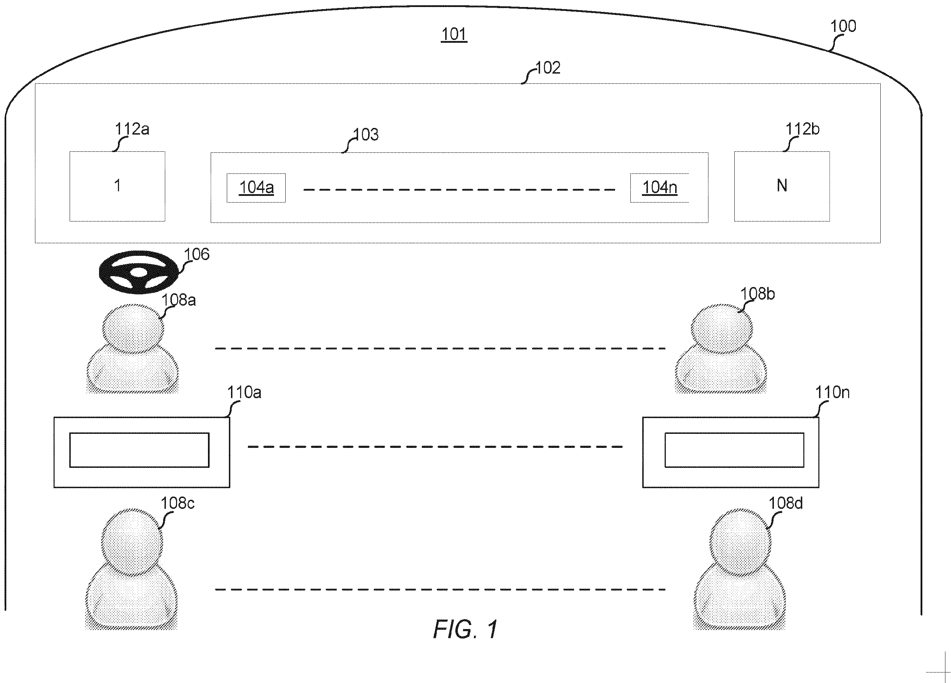

FIG. 1 generally illustrates an embodiment of a transportation apparatus 100 in accordance with the disclosure. The transportation apparatus 100 may include any apparatus that moves in distance. Examples of transportation apparatus 100 may include a vehicle such as a car, a bus, a train, a truck, a tram, or any other type of vehicle; may include a vessel such as a boat, a ship, a barge, a ferry or any other type of watercraft; may include an aircraft such as an airplane, a spaceship, or any other type of aircraft; or may include any other transportation apparatus. In one example, the transportation apparatus 100 is an electrical automobile. As shown, the transportation apparatus 100 may include a cabin 101 with a volume.

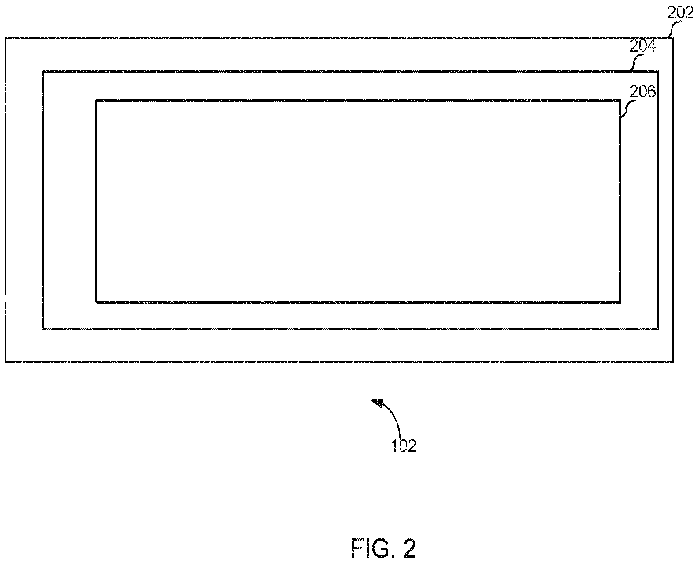

As shown in FIG. 1, in the cabin 101, there may be a dashboard 102. In implementations, the dashboard 102 may comprise multiple layers. FIG. 2 shows an example of a dashboard 102 in an explosion view. As shown, the dashboard 102 may comprise a first layer 202 made of a glass-fiber and reinforced thermoplastic material. Above the first layer 202, there may be a second layer 204 made of polyurethane foam. Above the second layer 204, there may be a wood layer 206. The wood layer 206 may comprise one or more layers itself and make up for a wood surface for the dashboard 102.

In some embodiments, the dashboard 102 can comprise a screen 103. The dashboard screen 103 can occupy a portion of the dashboard 102. The dashboard screen 103 can be suitable to display one or more information panels, such as the information panels 104 shown in FIG. 1. In implementations, the dashboard screen 103 may include any display technology, such as liquid-crystal display (LCD), crystal LCD, light-emitting diode (LED), organic light-emitting diode (OLED), active-matrix organic light-emitting diode (AMOLED), Plasma, projection panel, cathode ray tube (CRT), and/or any other display technology. As also shown, the information panels 104 displayed on the dashboard screen 103 are separate and independent from each other such that the individual information panels 104 are displayed at corresponding positions on the dashboard screen 103. In this example, information panel 104a is displayed at position 1 on the dashboard screen 103, information panel 104b is displayed at position 2 on the dashboard screen 103, information panel 104n-1 is displayed at position N-1 on the dashboard screen 103, and information panel 104n is displayed at position N on the dashboard screen 103.

In some examples, information presented in the information panels 104 may include gauge information related to the transportation apparatus 100, such as current speed/altitude/direction/wind, current longitude/latitude, distance traveled, RPM, fuel level, battery level, and/or any other gauge information related to the transportation apparatus 100. In some examples, information presented in the information panels 104 may include indication information, such as seat belt, airbag, door, trunk, maintenance, safety, window lock, door lock indication information or any other indication information. In some examples, information presented in the information panels 104 may include navigational or GPS information related to navigation of the transportation apparatus 100, such as current street traveled on, map of an area the transportation apparatus 100 is traveling in, the destination information, direction instructions, traffic condition, estimated arrival time, estimated delay due to traffic, and/or any other navigation information. In some examples, information presented in the information panels 104 may include cabin information, such as current temperature, humidity, wind speed, number of passengers in one or more zones in the cabin 101 and/or any other cabin information. In some examples, information presented in the information panels 104 may include configuration information regarding the transportation apparatus 100, such as seat configuration, mirror configuration, battery configuration, driving mode configuration, and/or any other configuration. In some examples, information presented in the information panels 104 may include entertainment information. For example, such an information panel may include a video screen capable of presenting a video or still images, a browser screen capable of presenting web information, a game screen capable of presenting one or more games for user interaction, a music information screen capable of enabling a user to consume music pieces, e-commerce information screen capable of enabling a user to engage remote transaction via the Internet, radio information screen capable of presenting a list of radio stations available for user consumption, and/or any other type of infotainment screen. In some examples, information presented in the information panels 104 may include notification information such as incoming call, incoming text message, incoming video chat request, and/or any other notification information. Other examples of information panels 104 are contemplated.

As still shown in FIG. 1, the transportation apparatus 100 may comprise one or more steering wheels 106 in the cabin 101. Although only one steering wheel 106 is shown in FIG. 1, this is not intended to be limiting. In some examples, the transportation apparatus 100 may include more than one steering wheel 106. For example, it is contemplated that the transportation apparatus 100 may be an aircraft that comprises at least a main steering wheel 106 for the main pilot and at least a secondary steering wheel 106 for a co-polit.

As also shown in FIG. 1, one or more users 108 may be arranged to occupy their corresponding positions in the cabin 101. The users 108 may include one or more drivers that control the movement and/or navigation of the transportation apparatus 100, one or more passengers, and/or any other type of users 108. In this example, the user 108a is a driver that controls the driving of the transportation apparatus 100, while other users 108, e.g., users 108b-d, are passengers. As still shown, there may be multiple rows of users 108 within the cabin 101 of the transportation apparatus 100.

As shown, in a row where the passengers 108b-d are located in the cabin 101, multiple passenger displays, such as displays 110a and 110n, may be provided for the passengers. In some embodiments, as shown in this example, each passenger in the row may be provided a passenger display mounted on a back panel of a seat in front of the passenger. In this example, the passenger display 110a is provided to passenger 108c, and the display 110n is provided to the passenger 108d. A given passenger display 110 provided in the cabin 101 may include a LCD screen similar to the one fitted on the dashboard as described above. As described herein, the given passenger display 110 may be connected to a user portable device associated with a passenger. For example, the passenger display 110a may be connected to a portable device associated with passenger 108c, and the passenger display 110n may be connected to a portable device associated with passenger 108d.

As shown, the dashboard 102 may comprise one or more airbag opening regions such as 112a and 112b. Although illustrated in FIG. 1 as being on the dashboard 102, the airbag regions 112a and 112b are not visible on the dashboard 102 when the airbag module behind it is not activated. A given airbag region, such as 112a, on the dashboard 102 can be precut during the manufacturing of dashboard 102. As mentioned above, the airbag region 102a may have invisible tear lines such that the airbag region 102a can be burst open when the airbag behind it is activated.

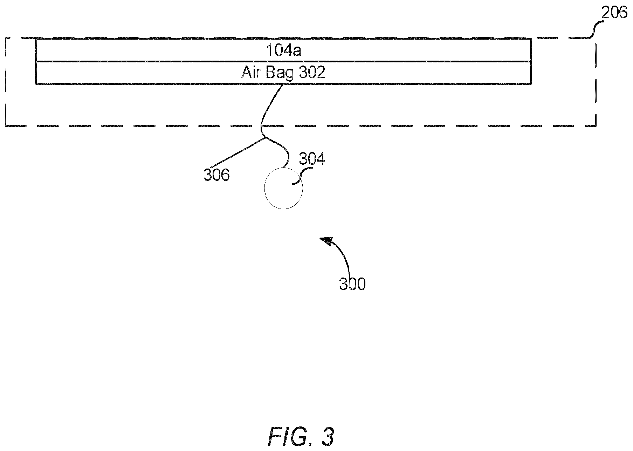

FIG. 3 illustrates an example embodiment of an airbag module 300 in accordance with the disclosure. It will be described with reference to FIG. 1 and FIG. 2. The airbag module 300 may comprise an airbag 302, a gas generator, and/or any other components. The airbag 302 may be arranged in the airbag region 104a of the wood layer 206. In some implementations, the airbag 302 can be attached to another layer (not shown in FIG.3) in the wood layer 206. In any case, since there is not much space in the wood layer 206 and typically the layers in the wood layer 206 are compressed or laminated close to each other, the airbag 302 may be made of thin material such as graphene or thermoplastic polyurethane.

As can be seen, the airbag 302 is connected to a gas generator 304 arranged outside the wood layer via a gas conduit 306 shown here as a pipe. There might one or more other openings for pipes or gas conduits branching off from the gas conduit 306 or for additional pipes or gas conduits to be arranged to fill the airbag 302 with gas. The gas generator 304 can be attached, for example, to a support component that provides support to the dashboard 102.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the scope of the claims.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A dashboard (102) of a transportation apparatus, the dashboard comprising a wood layer (206) that occupies at least a portion of the dashboard, the dashboard further comprising an airbag module (300) comprising:
an airbag (302), wherein the airbag is fitted in an airbag region (104a) of the dashboard, wherein the airbag region has a surface entirely made of wood; and
a gas generator (304) attached to the airbag for providing gas to fill the airbag;
**characterised in that**
the dashboard wood layer makes up a surface of the dashboard, and the airbag region (104a) is located within the wood layer (206).

2. The dashboard of claim 1 wherein the airbag is made of a film material.

3. The dashboard of claim 2, wherein the airbag is made of graphene or thermoplastic polyurethane.

4. The dashboard of any of claims 1 to 3, wherein the wood layer has multiple layers.

5. The dashboard of any preceding claim, wherein the gas generator is located outside the wood layer.

6. The dashboard of any preceding claim wherein the airbag region is a precut region in the wood layer.

## Patentansprüche

1. Armaturenbrett (102) einer Transportvorrichtung, wobei das Armaturenbrett eine Holzschicht (206) aufweist, die wenigstens einen Teil des Armaturenbretts einnimmt, wobei das Armaturenbrett ferner ein Airbagmodul (300) umfasst, das Folgendes umfasst:
einen Airbag (302), wobei der Airbag in einer Airbagregion (104a) des Armaturenbretts montiert ist, wobei die Airbagregion eine ganz aus Holz gefertigte Oberfläche hat; und
einen Gasgenerator (304), der an dem Airbag angebracht ist, um Gas zum Füllen des Airbag bereitzustellen;
**dadurch gekennzeichnet, dass**
die Armaturenbrettholzschicht eine Oberfläche des Armaturenbretts bildet und die Airbagregion (104a) sich in der Holzschicht (206) befindet.

2. Armaturenbrett nach Anspruch 1, wobei der Airbag aus einem Folienmaterial gefertigt ist.

3. Armaturenbrett nach Anspruch 2, wobei der Airbag aus Graphen oder thermoplastischem Polyurethan gefertigt ist.

4. Armaturenbrett nach einem der Ansprüche 1 bis 3, wobei die Holzschicht mehrere Schichten hat.

5. Armaturenbrett nach einem vorherigen Anspruch, wobei sich der Gasgenerator außerhalb der Holzschicht befindet.

6. Armaturenbrett nach einem vorherigen Anspruch, wobei die Airbagregion eine vorgeschnittene Region in der Holzschicht ist.

## Revendications

1. Tableau de bord (102) d'un appareil de transport, le tableau de bord comprenant une couche de bois (206) qui occupe au moins une partie du tableau de bord, le tableau de bord comprenant en outre un module de coussin de sécurité (300) comprenant :
un coussin de sécurité (302), le coussin de sécurité étant monté dans une région de coussin de sécurité (104a) du tableau de bord, la région de coussin de sécurité ayant une surface entièrement réalisée en bois ; et
un générateur de gaz (304) attaché au coussin de sécurité pour fournir un gaz afin de remplir le coussin de sécurité ;
**caractérisé en ce que**
la couche de bois du tableau de bord compose une surface du tableau de bord, et la région de coussin de sécurité (104a) est placé à l'intérieur de la couche de bois (206).

2. Tableau de bord selon la revendication 1 dans lequel le coussin de sécurité est réalisé en un pellicule de conditionnement.

3. Tableau de bord selon la revendication 2, dans lequel le coussin de sécurité est réalisé en graphène ou polyuréthane thermoplastique.

4. Tableau de bord selon l'une quelconque des revendications 1 à 3, dans lequel la couche de bois présente de multiples couches.

5. Tableau de bord selon n'importe quelle revendication précédente, dans lequel le générateur de gaz est placé en dehors de la couche de bois.

6. Tableau de bord selon n'importe quelle revendication précédente dans lequel la région de coussin de sécurité est une région précoupée dans la couche de bois.
